# EUROPÄISCHE PATENTSCHRIFT

(11) **EP 1 686 861 B1**
(45) Veröffentlichungstag und Bekanntmachung des Hinweises auf die Patenterteilung: **10.10.2007**
(21) Anmeldenummer: 04819204.1
(22) Anmeldetag: 12.11.2004
(51) Int. Cl.: A22C 17/02, B26D 7/06

(54) **AUFSCHNEIDEVORRICHTUNG MIT EINER KRÜMMBAREN BELADESCHWINGE**
SLICING DEVICE WITH A CURVABLE LOADING PINION
DISPOSITIF DE TRANCHAGE COMPRENANT UN VOLET DE CHARGEMENT INCURVABLE

(30) Priorität: 14.11.2003 DE 10353527
(43) Veröffentlichungstag der Anmeldung: 09.08.2006
(73) Patentinhaber: CFS Kempten GmbH, 87437 Kempten (DE)
(72) Erfinder: MÜLLER, Ralf, Peter, 87435 Kempten (DE)
(74) Vertreter: Wolff, Felix
(86) Internationale Anmeldenummer: PCT/EP2004/012864
(87) Internationale Veröffentlichungsnummer: WO 2005/051086

(56) Entgegenhaltungen:
- EP-A- 0 713 753
- EP-A- 0 867 263
- US-A- 4 583 435
- US-A- 5 129 298
- PATENT ABSTRACTS OF JAPAN Bd. 1998, Nr. 13, 30. November 1998 (1998-11-30) & JP 10 217190 A (ASAHI GIKEN KK), 18. August 1998 (1998-08-18)

## Beschreibung

Die vorliegende Erfindung betrifft eine Vorrichtung zum Aufschneiden von Lebensmittelriegeln mit einem Messer, bei der der Lebensmittelriegel mit einer Beladeschwinge von einer ersten in eine zweite Position reversibel anhebbar ist und die Beladeschwinge zumindest in einer Position gekrümmt ist. Des weiteren betrifft die vorliegende Erfindung ein Verfahren zum Aufschneiden von mindestens einem Lebensmittelriegel.

Stangenförmige Lebensmittel, beispielsweise Wurst, Käse und dergleichen werden heutzutage mit Hochleistungsaufschneidemaschinen, sogenannten Slicern, in Scheiben geschnitten. Dabei wird die Lebensmittelstange mittels eines geregelten Antriebs durch eine ortsfeste Schneidebene, In der der Schnitt durch ein schnell bewegtes Messer erfolgt, transportiert. Um für diesen Transport Hangabtriebskräfte ausnützen zu können, wird der Lebensmittelriegel oftmals in eine im Vergleich zur Horizontalen geneigte Stellung gebracht. Diese Neigung erfolgt in der Regel durch eine sogenannte Beladeschwinge, beispielsweise einem geraden Förderband oder einer Rollenbahn, das/die zwischen einer im wesentlichen horizontalen Beladeposition, in der der Lebensmittelriegel auf die Beladeschwinge geladen und einer Aufschneideposition, in der der die Beladeschwinge in Richtung des Messers geneigt ist, verschwenkbar ist. Diese Aufschneidemaschine bzw. Beladeschwinge hat jedoch den Nachteil, dass bei Lebensmittelriegen, die bis zu zwei Meter lang sein können, sehr hohe Hangabtriebskräfte oder bei einem schnellen Anheben am äußeren Ende des Lebensmittelriegels sogenannte Katapulteffekte auftreten, die nur durch eine verlangsamte Aufwärtsbewegung der Beladeschwinge vermieden werden können, was wiederum die Beladezeiten erhöht. Des weiteren können derartige Aufschneidemaschinen nur in Räumen mit einer vergleichsweise hohen Raumhöhe eingesetzt werden (Vgl. dazu Dokumente US4583435, US 5129298 und EP0713753)

Es war deshalb die Aufgabe der vorliegenden Erfindung, eine Aufschneidemaschine zur Verfügung zu stellen, die die Nachteile des Standes der Technik nicht aufweist

Diese Aufgabe wird erfindungsgemäß durch eine Vorrichtung und ein Verfahren zum Aufschneiden von Lebensmittelriegeln gemäß den Patentansprüchen 1 und 12 gelöst. Bevorzugte Ausführungsform der erfindungsgemäßen Vorrichtung und des erfindungsgemäßen Verfahrens sind in den Patentansprüchen 2 bis 10, und 13 beansprucht.

Es war für den Fachmann überaus erstaunlich und nicht zu erwarten, dass mit der erfindungsgemäßen Vorrichtung auch sehr lange Lebensmittelriegel aufgeschnitten werden können, ohne dass die Hangabtriebskräfte unkontrollierbar groß werden. Des weiteren sind die Katapulteffekte, die beim Anheben des Lebensmittelriegels von der Belade- in die Aufschneideposition auftreten, erheblich reduziert, so dass die Geschwindigkeit, mit der die Beladeschwinge von der einen in die andere Position angehoben wird, erhöht werden kann, wodurch sich wiederum die Beladezeiten reduzieren. Die erfindungsgemäße Vorrichtung ist einfach und kostengünstig herzustellen und zu betreiben. Die erfindungsgemäße Vorrichtung zum Aufschneiden von Lebensmitteln kann in einem Raum mit einer vergleichsweise geringen Höhe eingesetzt werden.

Erfindungsgemäß wird die Beladeschwinge von einer ersten in eine zweite Position angehoben und dabei vorzugsweise um einen Drehpunkt geschwenkt, wobei die Beladeschwinge zumindest in einer Position gekrümmt ist. Eine Krümmung im Sinne der Erfindung ist vorzugsweise eine Krümmung senkrecht zur Transportrichtung des Lebensmittelriegels. Die Beladeschwinge ist in der ersten der sogenannten Beladeposition im wesentlichen horizontal ausgerichtet, während sie in der zweiten, der angehobenen Aufschneideposition im wesentlichen zur Horizontalen geneigt und gekrümmt ist, wobei der dem Messer zugewandte Teil der Beladeschwinge vorzugsweise parallel zur Drehachse des Messers und der dem abgewandteste Teil vorzugsweise die geringste Neigung zur Horizontalen aufweist. Vorzugsweise erfolgt die Krümmung der Beladeschwinge durch mindestens ein Gelenk, vorzugsweise ein Drehgelenk, dessen Drehachse senkrecht zur Transportrichtung des Lebensmittelriegels verläuft.

Vorzugsweise werden mit der erfindungsgemäßen Vorrichtung mehrere Lebensmittelriegel parallel aufgeschnitten, die vorzugsweise nebeneinander auf der Beladeschwinge angeordnet sind. Die Beladeschwinge weist deshalb vorzugsweise sogenannte Spurrollen auf, d. h. Rollen, die an ihrem äußeren Umfang Einbuchtungen haben, in denen die Lebensmittelriegel geführt werden. Weiterhin bevorzugt weist die Beladeschwinge zusätzlich oder alternativ zu den Spurrollen Führungselemente, beispielsweise Leisten, auf, die parallel zu den Lebensmittelriegeln angeordnet sind und die jeweilige Produktspur begrenzen.

In einer weiteren bevorzugten Ausführungsform weist die Beladeschwinge an ihrem dem Messer zugewandten Ende einen Anschlag 8 auf, an dem die Lebensmittel vor Ihrer Verschwenkung und vor dem Aufschneiden anliegen. Dieser Anschlag wird entfernt, sobald die Lebensmittelriegel in der geneigten Stellung durch andere Mittel, beispielsweise Transportbänder und/oder einen Greifer gehalten werden. Die erfindungsgemäße Vorrichtung erlaubt es, auch sehr lange Lebensmittelriegel in Räumen mit einer vergleichsweise geringen Raumhöhe aufzuschneiden.

Ein weiterer Gegenstand der vorliegenden Erfindung ist ein Verfahren zum Aufschneiden von mindestens einem Lebensmittelriegel, wobei der Lebensmittelriegel vor dem Aufschneiden mit einer Beladeschwinge von einer Belade- in eine Aufschneideposition überführt wird und die Form der Beladeschwinge beim Überführen von einer in die andere Position geändert wird.

Vorzugsweise wird die Beladeschwinge senkrecht zur Transportrichtung der Lebensmittelriegel gekrümmt.

Weiterhin bevorzugt wird der Lebensmittelriegel, der auf der Beladeschwinge liegt, beim Überfuhren der Ladeschwinge senkrecht zu seiner Transportrichtung gebogen.

Es war für den Fachmann überaus erstaunlich und nicht zu erwarten, dass es mit dem erfindungsgemäßen Verfahren gelingt, beliebig lange Lebensmittelriegel aufzuschneiden.

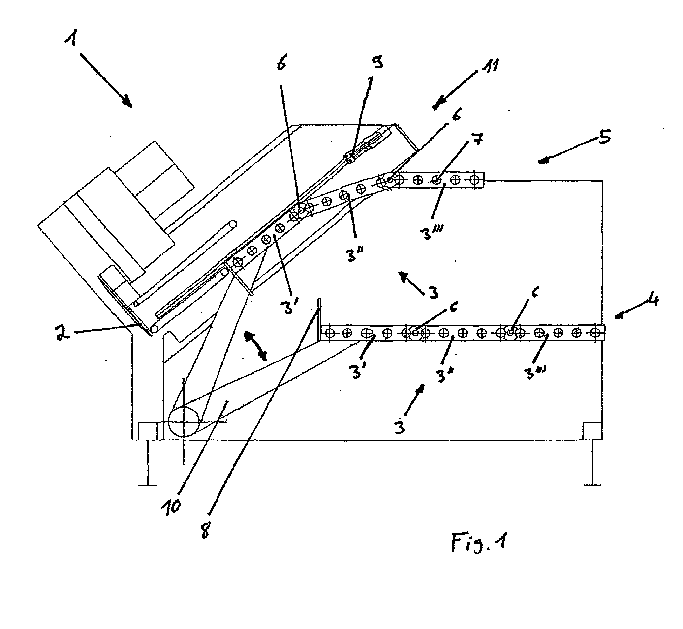

Im folgenden wird die Erfindung anhand der Figur 1. Die Erläuterungen sind lediglich beispielhaft und schränken den allgemeinen Erfindungsgedanken nicht ein.

Figur 1 zeigt die erfindungsgemäße Vorrichtung zum Aufschneiden von Lebensmittelriegeln. Die erfindungsgemäße Vorrichtung erlaubt es, mehrere Lebensmittelriegel parallel zueinander aufzuschneiden. Die erfindungsgemäße Aufschneidevorrichtung weist ein Messer 2 auf, das gegenüber der Horizontalen geneigt ist. Die Lebensmittelriegel werden vorzugsweise in Papierebene hintereinander auf die Beladeschwinge 3, die sich zunächst in der sogenannten Beladeposition 4 befindet, gelegt und gegen den Anschlag 8 geschoben. Die Beladeschwinge weist Rollen 7 auf, so dass die Lebensmittelriegel parallel zur Papierebene leicht transportierbar sind. Der Fachmann erkennt, dass die Beladeschwinge anstatt oder zusätzlich zu den Rollen auch Förderbänder aufweisen kann. In dem vorliegenden Fall besteht die Beladeschwinge 3 aus drei Teilbereichen 3', 3", 3"', die durch zwei Gelenke 6 miteinander verbunden sind. Die Beladeschwinge 3 liegt in der Beladeposition vorzugsweise auf einem Anschlag auf, so dass sie in dieser Position insgesamt horizontal ausgerichtet ist. Nachdem die Beladeschwinge 3 mit mindestens einem Lebensmittelriegel beladen worden ist, wird sie durch den Verschwenkmechanismus 10 von der Horizontalen in eine geneigte Aufschneideposition 5 überführt. Die Bewegung des Verschwenkmechanismus 10 ist durch den Doppelpfeil dargestellt. Die drei Elemente 3"', 3" und 3' der Beladeschwinge 3, die in der Beladeposition horizontal ausgerichtet waren, weisen nun jeweils eine unterschiedliche Lage zueinander auf, so dass die Beladeschwinge insgesamt senkrecht zur Transportrichtung 11 des Lebensmittelriegels gekrümmt ist. Ein Lebensmittelriegel (nicht dargestellt), der auf der Beladeschwinge liegt, wird durch die Schwerkraft gegen die Beladeschwinge gedrückt und ist dadurch ebenfalls gekrümmt. Durch die Krümmung der Beladeschwinge ist die Bauhöhe der erfindungsgemäßen Vorrichtung vergleichsweise gering. Des weiteren sind Katapulteffekte, die der Lebensmittelriegel beim Anheben von der Beladeposition 4 in die Aufschneideposition 5 erfährt, geringer als bei einer geraden Beladeschwinge gemäß dem Stand der Technik. Des weiteren zeigt Figur 1 einen Greifer 9, der mit dem dem Messer abgewandten Ende des Lebensmittelriegels (nicht dargestellt) in Kontakt gebracht wird. Da sich der Lebensmittelriegel anfänglich ggf. bis zum äußersten Ende des Abschnitts 3'" der Beladeschwinge 3 erstreckt, erkennt der Fachmann, dass der Greifer 9 erst dann mit dem Lebensmittelriegel in Kontakt gebracht und darin verankert werden kann, wenn sich das dem Messer abgewandte Ende des Lebensmittelriegels bezogen auf die Transportrichtung 11 des Lebensmittelriegels vor dem Greifers 9 befindet. Bevorzugt wird der Greifer 9 jedoch erst dann mit dem hinteren Ende des Lebensmittelriegels in Eingriff gebracht, wenn sich diese zumindest auf dem mit 3' bezeichneten Teils der Beladeschwinge 3 befindet. Dazu wird der Greifer 9 in die mit dem Pfeil 11 dargestellten Richtung bewegt, bis es das hintere Ende des Lebensmittelriegels erreicht. Nach dem Aufschneiden des/der Lebensmittelriegel wird die Beladeschwinge wieder in die Beladeposition 4 überführt mit mindestens einem Lebensmittelriegel beladen.

### Bezugszeichenliste

- 1: Vorrichtung zum Aufschneiden von Lebensmitteln
- 2: Messer
- 3: Beladeschwinge
- 4: Erste Position, Beladeposition
- 5: Zweite Position, Aufschneideposition
- 6: Gelenk
- 7.: Spurrollen
- 8: Anschlag
- 9: Greifer
- 10: Verschwenkmechanismus
- 11: Transportrichtung des Lebensmittelriegels während des Aufschneidens

## Patentansprüche

1. Vorrichtung (1) zum Aufschneiden von Lebensmittelriegeln mit einem Messer (2), bei der die Lebensmittelriegel mit einer Beladeschwinge (3) von einer ersten in eine zweite Position (4, 5) reversibel anhebbar ist, **dadurch gekennzeichnet, dass** die Beladeschwinge (3) zumindest in der Aufschneideposition (5) gekrümmt ist und dass die Beladeschwinge (3) in der Beladeposition im wesentlichen horizontal ausgerichtet ist.

2. Vorrichtung nach Anspruch 1, **dadurch gekennzeichnet, dass** die erste Position die Belade- (4) und die zweite die Aufschneidposition (5) ist.

3. Vorrichtung nach Anspruch 1 oder 2, **dadurch gekennzeichnet, dass** die Beladeschwinge (3) in der Aufschneidposition (5) im wesentlichen zur Horizontalen geneigt ist.

4. Vorrichtung nach einem der voranstehenden Ansprüche, **dadurch gekennzeichnet, dass** die Beladeschwinge (3) in der Aufschneideposition (5) gekrümmt ist.

5. Vorrichtung nach einem der voranstehenden Ansprüche, **dadurch gekennzeichnet, dass** die Beladeschwinge (3) mindestens ein Gelenk (6) aufweist.

6. Vorrichtung nach einem der voranstehenden Ansprüche, **dadurch gekennzeichnet, dass** die Beladeschwinge (3) Spurrollen (7) aufweist.

7. Vorrichtung nach einem der Ansprüche 1-6, **dadurch gekennzeichnet, dass** die Beladeschwinge ein oder mehrer vorzugsweise krümmbare Förderbänder aufweist.

8. Vorrichtung nach einem der voranstehenden Ansprüche, **dadurch gekennzeichnet, dass** die Beladeschwinge (3) an einem Ende einen Anschlag (8) für den Lebensmittelriegel aufweist.

9. Vorrichtung nach einem der voranstehenden Ansprüche, **dadurch gekennzeichnet, dass** mehrere Lebensmittelriegel parallel aufschneidbar sind.

10. Vorrichtung nach Anspruch 9, **dadurch gekennzeichnet, dass** die Lebensmittelriegel jeweils in einer Produktspur geführt sind, die auf der Beladeschwinge parallel angeordnet sind.

11. Vorrichtung nach Anspruch 10, **dadurch gekennzeichnet, dass** zwischen den Produktspuren seitliche-Führungselemente angeordnet sind.

12. Verfahren zum Aufschneiden von mindestens einem Lebensmittelriegel, wobei der Lebensmittelriegel vor dem Aufschneiden mit einer Beladeschwinge von einer Belade- in eine Aufschneideposition überführt wird, wobei die Form der Beladeschwinge beim Überführen von einer in die andere Position geändert wird, **dadurch gekennzeichnet, dass** der Lebensmittelriegel beim Überführen der Ladeschwinge gebogen wird.

13. Verfahren nach Anspruch 12, **dadurch gekennzeichnet, dass** die Beladeschwinge senkrecht zur Transportrichtung der Lebensmittelriegel gekrümmt wird.

## Claims

1. Device (1) for cutting up food bars by means of a knife (2), in which device the food bar can be raised reversibly from a first into a second position (4, 5) by means of a loading rocker (3), **characterized in that** the loading rocker (3) is bent at least in the cutting-up position (5), and **in that** the loading rocker (3) is oriented essentially horizontally in the loading position.

2. Device according to Claim 1, **characterized in that** the first position is the loading position (4) and the second is the cutting-up position (5).

3. Device according to Claim 1 or 2, **characterized in that** the loading rocker (3) is inclined essentially to the horizontal in the cutting-up position (5).

4. Device according to one of the preceding claims, **characterized in that** the loading rocker (3) is bent in the cutting-up position (5).

5. Device according to one of the preceding claims, **characterized in that** the loading rocker (3) has at least one joint (6).

6. Device according to one of the preceding claims, **characterized in that** the loading rocker (3) has guide rolls (7).

7. Device according to one of Claims 1-6, **characterized in that** the loading rocker has one or more preferably bendable conveyor bands.

8. Device according to one of the preceding claims, **characterized in that** the loading rocker (3) has at one end a stop (8) for the food bar.

9. Device according to one of the preceding claims, **characterized in that** a plurality of food bars can be cut up in parallel.

10. Device according to Claim 9, **characterized in that** the food bars are in each case guided in a product track, the product tracks being arranged parallel on the loading rocker.

11. Device according to Claim 10, **characterized in that** lateral guide elements are arranged between the product tracks.

12. Method for cutting up at least one food bar, the food bar, before being cut up, being transferred from a loading position into a cutting-up position by means of a loading rocker, the shape of the loading rocker being changed during the transfer from one position into the other, **characterized in that** the food bar is bent during the transfer of the loading rocker.

13. Method according to Claim 12, **characterized in that** the loading rocker is bent perpendicularly to the direction of transport of the food bars.

## Revendications

1. Dispositif (1) de tranchage d'aliments en bâton, comprenant une lame de coupe (2), les aliments en bâton pouvant être soulevés de manière réversible avec un volet de chargement (3) depuis une première position dans une deuxième position (4, 5), **caractérisé en ce que** le volet de chargement (3) est incurvé au moins dans la position de tranchage (5) et **en ce que** le volet de chargement (3) est orienté substantiellement horizontalement dans la position de chargement.

2. Dispositif selon la revendication 1, **caractérisé en ce que** la première position est la position de chargement (4) et la deuxième position est la position de tranchage (5).

3. Dispositif selon la revendication 1 ou 2, **caractérisé en ce que** le volet de chargement (3) est sensiblement incliné par rapport à l'horizontale dans la position de tranchage (5).

4. Dispositif selon l'une quelconque des revendications précédentes, **caractérisé en ce que** le volet de chargement (3) est incurvé dans la position de tranchage (5).

5. Dispositif selon l'une quelconque des revendications précédentes, **caractérisé en ce que** le volet de chargement (3) présente au moins une articulation (6).

6. Dispositif selon l'une quelconque des revendications précédentes, **caractérisé en ce que** le volet de chargement (3) présente des galets guides (7).

7. Dispositif selon l'une quelconque des revendications 1 à 6, **caractérisé en ce que** le volet de chargement présente une ou plusieurs bandes transporteuses de préférence incurvables.

8. Dispositif selon l'une quelconque des revendications précédentes, **caractérisé en ce que** le volet de chargement (3) présente à une extrémité une butée (8) pour les aliments en bâton.

9. Dispositif selon l'une quelconque des revendications précédentes, **caractérisé en ce que** l'on peut trancher parallèlement plusieurs aliments en bâton.

10. Dispositif selon la revendication 9, **caractérisé en ce que** les aliments en bâton sont à chaque fois guidés dans des pistes de produit respectives, qui sont disposées en parallèle sur le volet de chargement.

11. Dispositif selon la revendication 10, **caractérisé en ce que** l'on dispose entre les pistes de produit des éléments de guidage latéraux.

12. Procédé de tranchage d'au moins un aliment en bâton, l'aliment en bâton étant transféré avant le tranchage avec un volet de chargement d'une position de chargement dans une position de tranchage, la forme du volet de chargement lors du transfert d'une position dans l'autre étant modifiée, **caractérisé en ce que** l'aliment en bâton est courbé lors du transfert du volet de chargement.

13. Procédé selon la revendication 12, **caractérisé en ce que** le volet de chargement est cintré perpendiculairement à la direction de transport des aliments en bâton.
